(19) Europäisches Patentamt
European Patent Office
Office européen des brevets

(11) **EP 1 588 909 B1**

(12) **EUROPÄISCHE PATENTSCHRIFT**

(45) Veröffentlichungstag und Bekanntmachung des Hinweises auf die Patenterteilung:
**14.03.2007 Patentblatt 2007/11**

(51) Int Cl.:
***B60R 25/00*** *(2006.01)*    ***G07C 9/00*** *(2006.01)*

(21) Anmeldenummer: **05008833.5**

(22) Anmeldetag: **22.04.2005**

(54) **Schliesssystem, insbesondere für ein Kraftfahrzeug**

Locking system, in particular for a vehicle

Système de verrouillage, notamment pour un véhicule automobile

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **24.04.2004 DE 102004020153**

(43) Veröffentlichungstag der Anmeldung:
**26.10.2005 Patentblatt 2005/43**

(73) Patentinhaber: **Marquardt GmbH**
**78604 Rietheim-Weilheim (DE)**

(72) Erfinder:
• **Mattes, Johannes**
**78567 Fridingen (DE)**
• **Stehle, Wolfgang**
**78603 Renquishausen (DE)**
• **Hipp, Uwe**
**72514 Engelswies (DE)**

(74) Vertreter: **Otten, Herbert**
**Patentanwälte**
**Eisele, Otten, Roth & Dobler**
**Karlstrasse 8**
**88212 Ravensburg (DE)**

(56) Entgegenhaltungen:
DE-A1- 10 045 776    DE-A1- 19 845 649
DE-B3- 10 325 246    US-B1- 6 218 932

**Beschreibung**

Die Erfindung betrifft ein Verfahren zum Betrieb eines Schließsystems nach Patentanspruch 1 und ein Schließsystem nach Patentanspruch 7 sowie einen Schlüssel nach Patentanspruch 10.

Bei erhöhten Sicherheitsanforderungen werden elektronische Schließsysteme verwendet, die beispielsweise mittels elektromagnetischer Wellen arbeiten. Insbesondere bei Kraftfahrzeugen werden solche Schließsysteme als Türschließsysteme für die Zugangsberechtigung und/oder als Zündschloßsysteme, Lenkradverriegelungen, Wegfahrsperren o. dgl. für die Fahrberechtigung verwendet.

Ähnliche Schließsysteme sind aus der DE 43 40 260 A1 bekannt. Das Schließsystem besteht aus einer wenigstens zwei Zustände besitzenden, als Steuereinrichtung zur Ent- und/oder Verriegelung der Autotüren, des Zündschlosses o. dgl. ausgebildeten ersten Einrichtung und einer zugehörigen, in der Art eines elektronischen Schlüssels ausgebildeten zweiten Einrichtung. Die beiden Einrichtungen besitzen zu deren bestimmungsgemäßen Betrieb Mittel zum Senden und/oder Empfangen von Signalen. Im bestimmungsgemäßen Betrieb ist zwischen dem Schlüssel und der Steuereinrichtung wenigstens ein Signal als codiertes Betriebssignal zur Authentikation des Schlüssels übertragbar, so daß nach positiver Auswertung des übertragenen Betriebssignals und damit bei berechtigtem Schlüssel eine Änderung des Zustandes der Steuereinrichtung bewirkbar ist.

Solche Schließsysteme sind auch mit sogenannten "Keyless"-Funktionalitäten weiterentwickelt. So ist bei der "KeylessEntry"-Funktionalität eine manuelle Betätigung des elektronischen Schlüssels durch den Benutzer nicht mehr notwendig. Es genügt, daß der Benutzer den Schlüssel mit sich führt. Das Betriebssignal wird dann für die Zugangsberechtigung zwischen den beiden Einrichtungen selbsttätig übertragen, wenn der Benutzer sich in einem, in der Nähe des Kraftfahrzeugs befindlichen Wirkbereich aufhält und dort beispielsweise den Türgriff an der Autotüre betätigt. Ebenso können diese Schließsysteme eine "KeylessGo"-Funktionalität aufweisen, wobei das Betriebssignal für die Fahrberechtigung zwischen den beiden Einrichtungen selbsttätig übertragen wird, wenn der Benutzer sich innerhalb des Kraftfahrzeugs befindet und beispielsweise eine Start/Stop-Taste im Armaturenbrett betätigt.

Aus Sicherheitsgründen ist für die erweiternden Keyless-Funktionalitäten notwendig, den Ort festzustellen, an dem sich der elektronische Schlüssel befindet. Beispielsweise darf ein Start-Vorgang des Kraftfahrzeugs nicht möglich sein, wenn der Schlüssel außerhalb des Kraftfahrzeugs befindlich ist. Hierfür besitzt die als Schlüssel dienende zweite Einrichtung ein Mittel zur Messung der Feldstärke eines Bereichsabgrenzungssignals, das von der als Steuereinrichtung ausgebildeten ersten Einrichtung übertragen wird. Anhand der in der zweiten Einrichtung gemessenen Feldstärke dieses Bereichsabgrenzungssignals sowie deren Auswertung, beispielsweise mittels eines vorgegebenen Schwellwertes, wird dann der Standort der zweiten Einrichtung in Bezug auf die erste Einrichtung in der Art eines Bereichs ermittelt. Je nach gewünschter weiterer Verarbeitung kann es sich anbieten, daß die zweite Einrichtung anschließend ein die Information zum ermittelteten Standort enthaltendes Signal zur ersten Einrichtung sendet Ein solchermaßen ausgestaltetes Schließsystem ist aus der DE 102 02 330 A1 bekannt.

In der DE 100 45 776 A1 ist ein weiteres Verfahren zur Standortermittlung für die als tragbarer Codegeber ausgestaltete zweite Einrichtung bei einem als Zugangskontroll- und Fahrberechtigungssystem für ein Kraftfahrzeug dienenden Schließsystem beschrieben. Hierzu ist das Kraftfahrzeug mit mehreren, räumlich verteilten Antennen ausgestattet, die entsprechende Signale zur Bereichsabgrenzung senden. Der Codegeber ermittelt anhand der Phasenunterschiede die Signallaufzeiten dieser empfangenen Bcrcichsabgrenzungssignale.

Zusätzlich besitzt der Codegeber entsprechend einem kartesischen Koordinatensystem angeordnete Empfangsantennen, mit deren Hilfe die Feldstärken der orthogonal aufeinander stehenden Komponenten des empfangenen Bereichsabgrenzungssignals ermittelt werden, um so vektoriell die Richtung des jeweiligen Bereichsabgrenzungssignals zu bestimmen. Anhand der Signallaufzeiten sowie der Richtungen, aus denen die Bereichsabgrenzungssignale empfangen werden, berechnet schließlich der Codegeber dessen Position. Der Zugang zum Kraftfahrzeugs oder die Fahrbercchtigung für das Kraftfahrzeug wird lediglich dann gestattet wenn der Codegeber berechtigt ist sowie sich in einem vorgegebenen Bereich befindet.

Die Auswertung der gemessenen Feldstärke zur Standortbestimmung für den Schlüssel ist bei diesen bekannten Schließsystemen mit einem hohen Aufwand verbunden und in manchen Fällen mit Schwierigkeiten behaftet. Dies kann wiederum zu sicherheitskritischar Fehlfunktionen des Schließsystems führen.

Desweiteren ist aus der US 6 218 932 B1 ein Schließsystem bekannt, bei dem ebenfalls die Feldstärke eines von einem Kraftfahrzeug gesendeten Signals in einem Codegeber gemessen wird. Schließlich beschreibt die DE 198 45 649 A1 ein Schließsystem, bei dem sich stetig ändernde Signale vom Kraftfahrzeug gesendet werden.

Der Erfindung liegt ausgehend von der DE 100 45 776 A1 die Aufgabe zugrunde, ein Verfahren zur einfachen und dennoch fehlersicheren Standortbestimmung des Schlüssels für das mit Keyless-Funktionalität ausgestattete Schließsystem sowie ein Schließsystem und einen Schlüssel, die zur Durchführung dieses Verfahrens geeignet sind, anzugeben.

Diese Aufgabe wird bei einem Verfahren zum Betrieb eines Schließsystems durch die Merkmale des Anspruchs 1 sowie für ein solches Schließsystem durch die Merkmale des Anspruchs 7 und für einen Schlüssel durch die Merkmale des Anspruchs 10 gelöst.

Beim erfindungsgemäßen Verfahren zum Betrieb des Schließsystems werden in der zweiten Einrichtung die Feldstärken für wenigstens zwei orthogonal aufeinander stehende Komponenten des Bereichsabgrenzungssignals gemessen. Die Feldstärke jeder Komponente wird zur Standortermittlung zunächst mit einem ersten Schwellwert A und dann mit einem zweiten Schwellwert B verglichen, wobei der zweite Schwellwert B kleiner als der erste Schwellwert A ist. Anschließend wird lediglich mittels logischer, und zwar insbesondere boole'scher Verknüpfungen der Ergebnisse dieser Vergleiche der Bereich für den Standort der zweiten Einrichtung bestimmt, also insbesondere die Innen/Aussen-Abgrenzung bzw. die Innen/Aussen-Erkennung der zweiten Einrichtung im/am Kraftfahrzeug durchgeführt. Weitere Ausgestaltungen der Erfindung sind Gegenstand der Unteransprüche.

Zweckmäßigerweise werden in der zweiten Einrichtung die Feldstärken für drei vertikal aufeinander stehende Komponenten des Bereichsabgrenzungssignals gemessen. Dadurch lassen sich alle drei Raumrichtungen in der x-, y- sowie z-Achse erfassen, so daß eine exakte Standortbestimmung bei beliebig im Raum orientierter zweiter Einrichtung ermöglicht ist.

Es hat sich ergeben, daß der zweite Schwellwert B in Höhe von in etwa dem ersten Schwellwert A dividiert durch 1.414 entsprechend der Wurzel aus der Zahl 2 gewählt werden sollte. Dadurch ist eine exakte Bereichsabgrenzung bei einer Orientierung der zweiten Einrichtung mit einem Winkel von 0 Grad und/oder 45 Grad und/oder 90 Grad zu den Raumachsen ermöglicht. Bei einer Orientierung in Zwischenlagen zu den genannten Winkeln tritt ein lediglich geringer und damit tolerierbarer Berechnungsfehler auf.

In einer weiteren Ausgestaltung werden Bereichsabgrenzungssignale von an der linken sowie der rechten Seite des Kraftfahrzeugs angeordneten Antennen, von einer im Heckbereich angeordneten Antenne und einer im Frontbereich angeordneten Antenne übertragen. Zweckmäßigerweise können die an der Seite befindlichen Antennen in der jeweiligen Autotüre, die im Heckbereich befindliche Antenne an der Hutablage sowie die im Frontbereich befindliche Antenne am Armaturenbrett, Innenspiegel o. dgl., angeordnet sein. Die Antennen senden das Bereichsabgrenzungssignal jeweils mit derselben Leistung. Um Fertigungstoleranzen auszugleichen und/oder die Keyless-Funktionalität der jeweiligen Fahrzeuggeometrie anzupassen, läßt sich die Messung der Feldstärke des von der jeweiligen Antenne empfangenen Bereichsabgrenzungssignals so kalibrieren, daß die an der zur jeweiligen Antenne gegenüberliegende Grenze zwischen dem Innen- und dem Außenraum des Kraftfahrzeugs gemessene Feldstärke bei in etwa exakt ausgerichteter zweiter Einrichtung gerade der Größe des ersten Schwellwerts A entspricht. Es wird nach Empfang des Bereichsabgrenzungssignals von jeweils einer Antenne die Bereichsbestimmung für die jeweilige Antenne mittels Vergleich mit den beiden Schwellwerten A und B vorgenommen. Danach kann durch logische, und zwar insbesondere boole'sche Verknüpfung in der Art von Schnittmengen dieser so ermittelten Bereiche für die jeweiligen Antennen die Bestimmung des Standortes der zweiten Einrichtung entsprechend einer Abgrenzung von Innen / Außen sowie gegebenenfalls der Seite in Bezug auf das Kraftfahrzeug erfolgen. Folglich läßt sich dann die jeweilige Keyless-Funktionalität nach positiver Authentikation auslösen.

Die Bereichsabgrenzung von Innen/Außen für den Standort der zweiten Einrichtung läßt sich beispielsweise mit Hilfe der folgenden Formeln ermitteln:

$$\text{Innen} = ((\text{AntLinks}) \wedge (\text{AntRechts})) \vee (\text{AntFront}) \vee (\text{AntHeck})$$

sowie

$$\text{Außen} = \text{sonst}$$

wobei

$$\text{AntLinks} / \text{AntRechts} / \text{AntFront} / \text{AntHeck}$$
$$= ((\text{RSSIx} > A) \vee (\text{RSSIy} > A) \vee (\text{RSSIz} > A)) \vee ((\text{RSSIx} > B) \wedge (\text{RSSIz} > B)) \vee$$
$$((\text{RSSIy} > B) \wedge (\text{RSSIz} > B)) \vee ((\text{RSSIx} > B) \wedge (\text{RSSIy} > B))$$

für das Bereichsabgrenzungssignal der jeweiligen Antenne gilt. Dabei haben die Variablen folgende Bedeutung:

RSSI: Feldstärkesignal in Raumrichtung gemäß Richtungsindex von der entsprechenden Antenne,
A: Schwellwert für erste Schwelle und
B: Schwellwert für zweite Schwelle.

Bei den Operatoren handelt es sich um

∧: boole'scher UND-Operator
∨: boole'scher Oder-operateur
>: Vergleichs-Operator "größer als".

Als vorteilhaft hat es sich erwiesen, die beiden Schwellwerte A und B in einen Speicher der zweiten Einrichtung einzuschreiben. In diesem Fall sind die Schwellwerte A und B flexibel anpaßbar. Beispielsweise können die Schwellwerte A und B in der Art von kalibrierten Werten bei der Montage des Schließsystems im Kraftfahrzeuge ermittelt und dann in den Speicher geschrieben werden. Als Speicher eignet sich beispielsweise ein EEPROM.

Zur Durchführung des erfindungsgemäßen Verfahrens läßt sich ein Schließsystem und/oder ein Schlüssel für ein Schließsystem in einem Kraftfahrzeug in kostengünstiger Weise derart ausgestalten, daß in der zweiten Einrichtung ein Mittel zur Messung der Feldstärken für wenigstens zwei orthogonal aufeinander stehende Komponenten des Bereichsabgrenzungssignals angeordnet ist. Weiter ist in der zweiten Einrichtung ein Mittel zum Vergleich der Komponenten des Bereichsabgrenzungssignals mit einem ersten Schwellwert A sowie mit einem weiteren zweiten Schwellwert B, der insbesondere kleiner als der erste Schwellwert A ist, befindlich. Schließlich befindet sich in der zweiten Einrichtung ein Mittel zur logischen, und zwar insbesondere boole'scher "und/oder"-Verknüpfung der Ergebnisse dieser Vergleiche für die Bestimmung des Bereichs für deren Standort.

In einfacher Art und Weise kann das Schließsystem an der linken sowie der rechten Seite des Kraftfahrzeugs, im Heckbereich und im Frontbereich jeweils eine Antenne aufweisen. Zweckmäßigerweise befindet sich die seitliche Antenne in der jeweiligen Autotüre, die hintere Antenne an der Hutablage und die vordere Antenne am Armaturenbrett, Innenspiegel o. dgl. des Kraftfahrzeugs. Zur Bereichsbestimmung, und somit zur Bestimmung des Standortes der zweiten Einrichtung entsprechend Innen/Außen in Bezug auf das Kraftfahrzeug, werden dann Bereichsabgrenzungssignale von der jeweiligen Antenne übertragen.

In fertigungstechnisch einfacher Weise besitzt die zweite Einrichtung einen Speicher, in den die beiden Schwellwerte A und B eingeschrieben sind. Als Speicher läßt sich kostengünstig ein EEPROM verwenden. Dann können die Schwellwerte A und B auch angepaßt an das jeweilige Kraftfahrzeug in der Art von kalibrierten Werten individuell bestimmt und in den Speicher eingeschrieben werden.

Im wesentlichen läßt sich die Erfindung also dadurch charakterisieren, daß zwei kalibrierte Schwellwerte A und B in das EEPROM des Schlüssels eingeschrieben werden. Diese beiden Schwellwerte A und B dienen als Berechnungsgrundlage für die Erkennung des boole'schen Wertes entsprechend Innen/Außen in Hauptrichtung mittels des ersten Schwellwertes A oder über zwei logisch UND-verknüpfte Richtungen entsprechend einer 45°-Stellung unter Nutzung des zweiten Schwellwertes B.

Die mit der Erfindung erzielten Vorteile bestehen insbesondere darin, daß der Standort der zweiten Einrichtung in Bezug auf die erste Einrichtung in einfacher Art und Weise bestimmt und für die Ausführung der Keyless-Funktionalitäten berücksichtigt werden kann. Insbesondere erübrigt sich dadurch die ansonsten notwendige, jedoch aufwendige vektorielle Addition zwischen den Richtungen, um lageunabhängige Systeme zu erhalten. Es wird dadurch einem Fehlverhalten des Schließsystems vorgebeugt und dessen Betrieb fehlersicherer, so daß folglich eine Verbesserung der Positionsbestimmung eines Schlüssels unter optimierter Lageunabhängigkeit in einem KeylessEntry/Go-Fahrzeug erzielt wird. Außerdem wird auch beim Einsatz von nicht idealen Ferritantennen als induktiv empfangende Systeme in der zweiten Einrichtung beim Ortungsverfahren entsprechend einer Innen/Aussen-Abgrenzung eine verbesserte Genauigkeit erzielt.

Ein Ausführungsbeispiel der Erfindung mit verschiedenen Weiterbildungen und Ausgestaltungen ist in den Zeichnungen dargestellt und wird im folgenden näher beschrieben. Es zeigen

Fig. 1    ein mit einem Schließsystem ausgestattetes Kraftfahrzeug,
Fig. 2    ein schematisches Blockschaltbild für das Schließsystem,
Fig. 3    ein schematisches Blockschaltbild des ID-Gebers mit einem Diagramm zur Übertragung der Signale,
Fig. 4    ein Kraftfahrzeug mit Empfangsbereichen für das Bereichsabgrenzungssignal,
Fig. 5    ideale Empfangscharakteristik zweier orthogonal empfangender Ferritspulen in einer zweidimensionalen Ansicht,
Fig. 6    reale Empfangscharakteristik zweier orthogonal empfangender Ferritspulen in einer zweidimensionalen Ansicht,
Fig. 7    Empfangscharakteristik mittels Zwei-Schwellen-Erkennung mit logischer Verknüpfung bei realen Ferritantennen in einer zweidimensionalen Ansicht und

Fig. 8   Empfangscharakteristik mittels vektorieller Addition bei realen Ferritantennen in einer zweidimensionalen Ansicht.

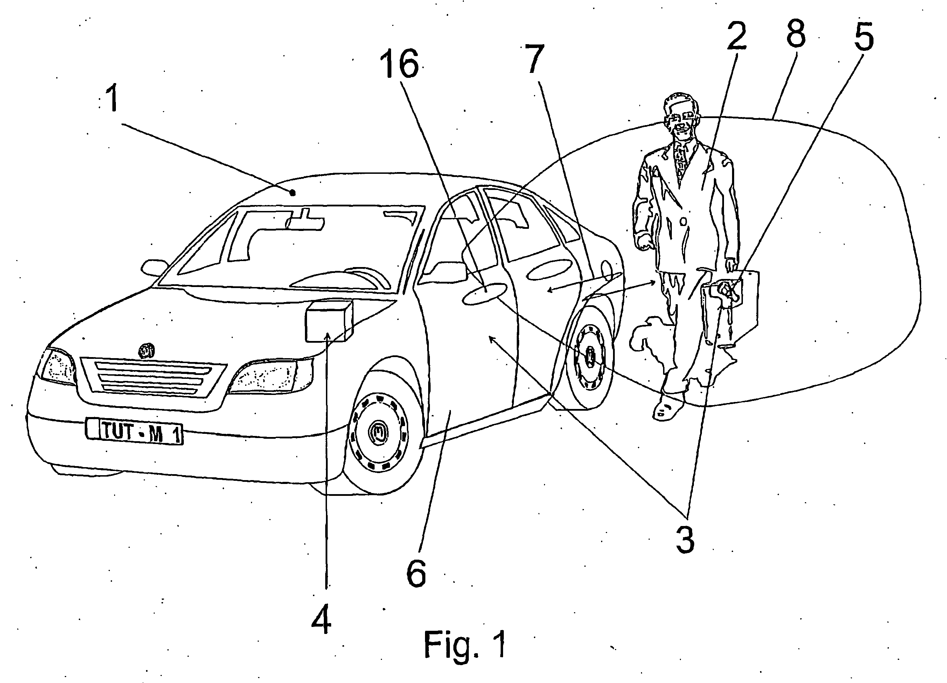

In Fig. 1 ist ein Kraftfahrzeug 1 mit dem berechtigten Benutzer 2 zu sehen. Das Kraftfahrzeug 1 ist für die Zugangsberechtigung mit einem Schließsystem 3 als Türschließsystem versehen, das eine als eine Steuereinrichtung ausgebildete erste Einrichtung 4 und eine zugehörige zweite Einrichtung 5 umfaßt Die zweite Einrichtung 5 ist in der Art eines elektronischen Schlüssels, eines Identifikations(ID)-Gebers, einer Chipkarte, einer Smartcard o. dgl. ausgebildet. Die zweite Einrichtung 5 befindet sich im Besitz des berechtigten Benutzers 2, womit dieser innerhalb eines Wirkbereichs 8 Zugang zum Kraftfahrzeug 1 besitzt.

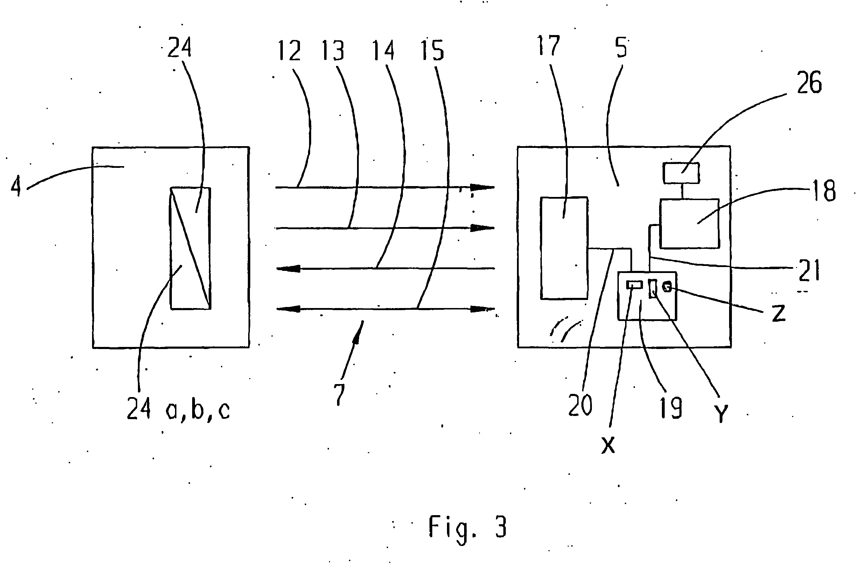

Die erste Einrichtung 4 besitzt wenigstens zwei Zustände, wobei im ersten Zustand eine Verriegelung und im zweiten Zustand eine Entriegelung der Autotüren 6 vorliegt. Die beiden Einrichtungen 4, 5 besitzen zu deren bestimmungsgemäßen Betrieb Mittel zum Senden und/oder Empfangen von Signalen 7. Bei wenigstens einem dieser zwischen der zweiten Einrichtung 5 und der ersten Einrichtung 4 übertragenen Signale 7 handelt es sich um ein codiertes, elektromagnetisches Betriebssignal 15 (siehe Fig. 3). Das codierte Betriebssignal 15 dient zur Authentikation der zweiten Einrichtung 5, womit bei berechtigter zweiter Einrichtung 5 nach positiver Auswertung des übertragenen Betriebssignals 15 eine Änderung des Zustandes der ersten Einrichtung 4 bewirkbar ist. Die Übertragung des codierten Betriebssignals 15 erfolgt dann, wenn der berechtigte Benutzer 2 den Türgriff 16 an der Autotüre 6 betätigt oder sich dem Türgriff 16 annähert. Dadurch wird die Entriegelung der Autotüren 6 entsprechend der KeylessEntry-Funktionalität ausgelöst. Ebensogut kann die Übertragung des codierten Betriebssignals 15 auch selbsttätig ohne Mitwirkung des Benutzers 2 erfolgen, sobald dieser den Wirkbereich 8 betritt, was jedoch im folgenden nicht näher betrachtet wird. Schließt der Benutzer die Autotüren 6 von außen, so erfolgt eine selbsttätige Verriegelung der Autotüren 6. Ebensogut kann die selbsttätige Verriegelung der Autotüren 6 erfolgen, nachdem der Benutzer den Wirkbereich 8 verlassen hat.

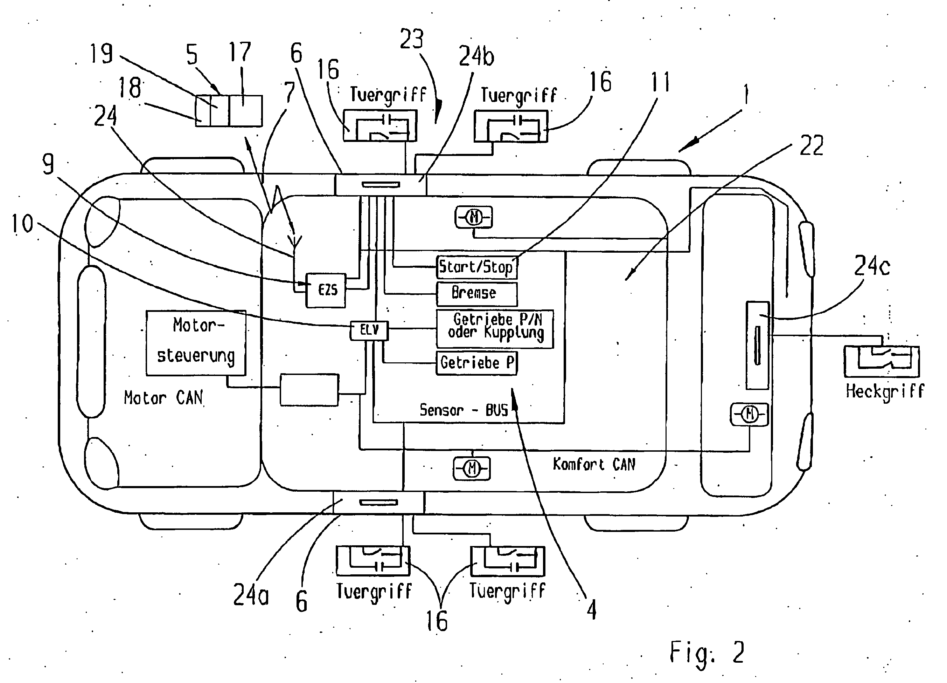

Das Schließsystem 3 stellt weiterhin die Fahrberechtigung für das Kraftfahrzeug 1 fest. Hierzu bewirkt die als Steuereinrichtung ausgebildete erste Einrichtung 4 ebenfalls entsprechend den beiden Zuständen die Ent- und/oder Verriegelung des Zündschlosses 9 oder der Lenkradverriegelung 10, die in Fig. 2 zu sehen sind. Ebensogut kann ein sonstiges funktionsrelvantes Bauteil des Kraftfahrzeugs 1 durch die erste Einrichtung 4 dementsprechend angesteuert werden. Beispielsweise kann dadurch eine Freigabe und/oder Sperrung einer Wegfahrsperre, des Motorsteuergeräts o. dgl. erfolgen. Die Übertragung des codierten Betriebssignals 15 zur Authentikation der zweiten Einrichtung 5 erfolgt dann, wenn der berechtigte Benutzer 2 sich im Kraftfahrzeug 1 befindet und einen Start/Stop-Schalter 11 betätigt. Dadurch wird der Start-Vorgang o. dgl. des Kraftfahrzeugs 1 entsprechend der KeylessGo-Funktionalität ausgelöst,

Die Funktionsweise des erfindungsgemäßen Schließsystems 3 soll nun anhand der Fig. 3 näher erläutert werden. Zunächst sendet die erste Einrichtung 4 ein als Wecksignal bezeichnetes elektromagnetisches Signal 12 für die zugehörige zweite Einrichtung 5. Dadurch wird die zweite Einrichtung 5 aus einem Ruhezustand mit verringertem Energiebedarf in einen aktivierten Zustand für den bestimmungsgemäßen Betrieb übergeführt. Wie nachfolgend noch näher erläutert, sendet danach die erste Einrichtung 4 wenigstens ein weiteres elektromagnetisches Signal 13, das auch als Bereichsabgrenzungssignal bezeichnet ist. Dadurch kann die zugehörige zweite Einrichtung 5 deren Standort in Bezug auf die erste Einrichtung 4 bestimmen. Insbesondere läßt sich feststellen, ob die zweite Einrichtung 5 im Außenraum 23 des Kraftfahrzeugs 1 sowie gegebenenfalls an welcher Stelle und/oder im Innenraum 22 des Kraftfahrzeugs 1 befindlich ist (siehe auch Fig. 2). Nachfolgend sendet die zweite Einrichtung 5 ein die Information zum ermittelteten Standort beinhaltendes weiteres Signal 14 zur ersten Einrichtung 4, das im folgenden auch als Rückantwortsignal bezeichnet ist. Schließlich wird dann, wie bereits beschrieben, das codierte elektromagnetische Betriebssignal 15 zur Authentikation zwischen der ersten und der zweiten Einrichtung 4, 5 übertragen. Das Signal 15 kann insbesondere aus mehreren Teilsignalen bestehen und in einer bidirektionalen Kommunikation zwischen den beiden Einrichtungen 4, 5 übertragen werden. Im Hinblick auf nähere Einzelheiten zur bidirektionalen Kommunikation an sich wird auch auf die DE 43 40 260 A1 verwiesen.

Die zweite Einrichtung 5, die als schematisches Blockschaltbild ebenfalls in Fig. 3 gezeigt ist, weist einen Sender/Empfänger 17 mit Antennen und eine beispielsweise aus einem Mikrocomputer bestehende Logikschaltung 18 auf. Weiter ist in der zweiten Einrichtung 5 ein Mittel 19 zur Messung der Feldstärke F wenigstens eines von der ersten Einrichtung 4 übertragenen Signals angeordnet. Das Mittel 19 zur Messung der Feldstärke F mißt vor allem die Feldstärke des als Bereichsabgrenzungssignal 13 dienenden Signals. Anhand der gemessenen Feldstärke wird dann in der Logikschaltung 18 der zweiten Einrichtung 5 der Standort der zweiten Einrichtung 5 in Bezug auf die erste Einrichtung 4 ermittelt.

Zweckmäßigerweise ist das Mittel 19 zur Messung der Feldstärke als ein integrierter Baustein ausgestaltet, der nachfolgend auch als RSS(Radio Signal Strength)-Chip bezeichnet ist. Der RSS-Chip 19 besitzt einen Eingang 20, der mit dem Sender/Empfänger 17 verbunden ist, sowie einen RSSI(Radio Signal Strength Indicator)-Ausgang 21, der wiederum mit der Logikschaltung 18 verbunden ist. Der RSS-Chip 19 erhält über den Eingang 20 das vom Sender/Empfänger 17 empfangene Bereichsabgrenzungssignal 13 und erzeugt an seinem RSSI-Ausgang 21 ein in funktioneller Abhängigkeit zur Feldstärke F des Bereichsabgrenzungssignals 13 stehendes RSSI-Signal. Beispielsweise kann das RSSI-Signal proportional oder logarithmisch zur Feldstärke F des Bereichsabgrenzungssignals 13 abhängig sein und als elektrische Spannung, beispielsweise im mV-Bereich am RSSI-Ausgang 21 anstehen. Das RSSI-Signal wird vom RSSI-Ausgang 21 zum Mikroprozessor 18 weitergeleitet und dort weitcrverarbeitet

Der RSS-Chip 19 in der zweiten Einrichtung 5 ist als Mittel zur Messung der Feldstärken F für wenigstens zwei orthogonal aufeinander stehende Komponenten des Bercichsabgrenzungssignals 13, also von dessen x- und/oder y- und/oder z-Komponente ausgebildet, indem der Sender/Empfänger 17 wenigstens zwei orthogonal aufeinander stehende Antennen, beispielsweise orthogonal aufeinanderstehende Spulen für induktive Bereichsabgrenzungssignale, besitzt. Die in x-, y sowie z-Richtung ausgerichteten Spulen sind schematisch innerhalb des RSS-Chips 19 in Fig. 3 angedeutet, Der Mikroprozessor 18 in der zweiten Einrichtung 5 arbeitet als ein Mittel zum Vergleich der Feldstärken F dieser x- und/oder y- und/oder z- Komponenten des Bereichsabgrenzungssignals 13 mit einem ersten Schwellwert A sowie weiter mit einem zweiten Schwellwert B. Desweiteren dient der Mikroprozessor 18 zusätzlich in der zweiten Einrichtung 5 als ein Mittel zur logischen Verknüpfung der Ergebnisse dieser Vergleiche, und zwar vor allem zur Durchführung von boole'schen und/oder-Verknüpfungen.

Das Verfahren zur Bestimmung des Bereichs für den Standort der zweiten Einrichtung 5 arbeitet nun wie folgt. Zunächst werden mit Hilfe des RSS-Chips 19 die Feldstärken für wenigstens zwei orthogonal aufeinander stehende x- und/oder y- und/oder z- Komponenten des Bereichsabgrenzungssignals 13 gemessen sowie die zugehörigen RSSIx- und/oder RSSIy- und/oder RSSIz-Signale am RSSI-Ausgang 21 erzeugt. Bevorzugterweise werden in der zweiten Einrichtung 5 die Feldstärken F für drei vertikal aufeinander stehende Komponenten in die x-, y- sowie z-Raumrichtungen des Bereichsabgrenzungssignals 13 gemessen. Der am RSSI-Ausgang 21 bereitgestellt Wert RSSI für die Feldstärke F jeder dieser Komponenten wird im Mikroprozessor 18 mit einem ersten Schwellwert A und anschließend mit einem zweiten Schwellwert B verglichen. Dabei ist der zweite Schwellwert B kleiner als der erste Schwellwert A, und zwar wird der zweite Schwellwert B mit einer Größe von in etwa $A/\sqrt{2}$ gewählt. Anschließend wird im Mikroprozessor 18 lediglich mittels logischer, und zwar boole'scher und/oder-Verknüpfungen der Ergebnisse dieser Vergleiche der Bereich für den Standort der zweiten Einrichtung 5 bestimmt. Wie bereits ausgeführt, wird der so ermittelte Standort bei Auslösung der Keyless-Funktionalitäten des Schließsystems 3 entsprechend berücksichtigt.

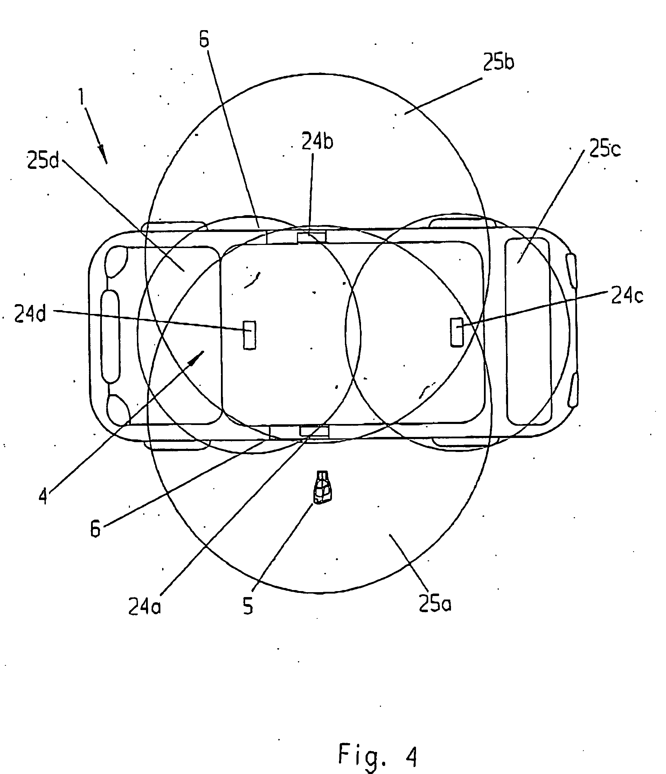

In einer weiteren Ausbildung, die in Fig. 4 zu sehen ist, enthält die erste Einrichtung 4 vier Sender mit Antennen 24a, 24b, 24c, 24d. Die Antenne 24a befindet sich in der linken Autotüre 6, die Antenne 24b in der rechten Autotüre 6, die Antenne 24c im Heckbereich, beispielsweise an der Hutablage, im Kofferraum o. dgl., und die Antenne 24d im Frontbereich, beispielsweise am Armaturenbrett, Innenspiegel o. dgl., so daß einzelne Bereichsabgrenzungssignale 13 von der linken sowie der rechten Seite, vom Heckbereich und vom Frontbereich des Kraftfahrzeugs 1 übertragen werden. Entsprechend dem beschriebenen "Zweifach-Schwellwert-Verfahren" wird nun die Bereichsbestimmung des linken Türbereichs 25a, des rechten Türbereichs 25b, des Heckbereichs 25c sowie des Frontbereichs 25d für die jeweilige Antenne 24a, 24b, 24c, 24d in der zweiten Einrichtung 5 vorgenommen. Anschließend erfolgt dann durch logische boole'sche Verknüpfung in der Art von Schnittmengen dieser Bereiche 25a, 25b, 25c, 25d für das Bereichsabgrenzungssignal 13 der jeweiligen Antenne 24a, 24b, 24c, 24d die Bestimmung des Standortes der zweiten Einrichtung 5 entsprechend Innen / Außen in Bezug auf das Kraftfahrzeug 1.

Die Ermittlung für den Bereich Innen / Außen für den Standort der zweiten Einrichtung 5 bei Implementation mittels vier ortenden Fahrzeugantennen kann mit Hilfe der folgenden Formel erfolgen, deren Auswertung durch entsprechende Programmierung im Mikroprozessor 18 vorgenommen wird.

$$\text{Innen} = ((\text{AntLinks}) \wedge (\text{AntRechts})) \vee (\text{AntFront}) \vee (\text{AntHeck})$$

sowie

$$\text{Außen} = \text{sonst}$$

wobei

$$\text{AntLinks} = ((\text{RSSIx} > A) \vee (\text{RSSIy} > A) \vee (\text{RSSIz} > A)) \vee ((\text{RSSIx} > B) \wedge (\text{RSSIz} > B)) \vee$$
$$((\text{RSSIy} > B) \wedge (\text{RSSIz} > B)) \vee ((\text{RSSIx} > B) \wedge (\text{RSSIy} > B))$$

für das Bereichsabgrenzungssignal 13 der Antenne 24a,

$$\mathrm{AntRechts} = ((RSSIx > A) \lor (RSSIy > A) \lor (RSSIz > A)) \lor ((RSSIx > B) \land (RSSIz > B)) \lor ((RSSIy > B) \land (RSSIz > B)) \lor ((RSSIx > B) \land (RSSIy > B))$$

für das Bereichsabgrenzungssignal 13 der Antenne 24b,

$$\mathrm{AntHeck} = ((RSSIx > A) \lor (RSSIy > A) \lor (RSSIz > A)) \lor ((RSSIx > B) \land (RSSIz > B)) \lor ((RSSIy > B) \land (RSSIz > B)) \lor ((RSSIx > B) \land (RSSIy > B))$$

für das Bereichsabgrenzungssignal 13 der Antenne 24c und

$$\mathrm{AntFront} = ((RSSIx > A) \lor (RSSIy > A) \lor (RSSIz > A)) \lor ((RSSIx > B) \land (RSSIz > B)) \lor ((RSSIy > B) \land (RSSIz > B)) \lor ((RSSIx > B) \land (RSSIy > B))$$

für das Bereichsabgrenzungssignal 13 der Antenne 24d jeweils bestimmt ist.

Dabei haben die Abkürzungen folgende Bedeutung:

RSSI: Feldstärke der Komponente entsprechend Richtungsindex des Bereichsabgrenzungssignals von der entsprechenden Antenne (beispielsweise als Spannung im mV-Bereich gegeben)

A: Schwellwert für die erste Schwelle (dieser kann beispielsweise 100 mV betragen)

B: Schwellwert für die zweite Schwelle (dieser kann beispielsweise ca. 70 mV betragen).

$\land, \lor$: UND-, ODER-Operator

$>$: Vergleich "größer als"

Es bietet sich an, die beiden Schwellwerte A und B in einen in Fig. 3 sichtbaren Speicher 26 der zweiten Einrichtung 5 einzuschreiben. Um Fertigungstoleranzen auszugleichen, können diese Schwellwerte A und B kalibriert werden, beispielsweise auf die maximal gewünschte Reichweite des Bereichsabgrenzungssignals 13 für die jeweilige Antenne 24a, 24b, 24c, 24d. Der Flexibilität halber bietet sich ein EEPROM als Speicher 26 an.

Kurz gesagt läßt sich das Verfahren zum Betrieb des Schließsystems 3 gemäß dieser weiteren Ausbildung dadurch charakterisieren, daß ein Einschreiben von zwei kalibrierten Schwellwerten A, B in das EEPROM 26 des Schlüssels 5 als Berechnungsgrundlage für die Erkennung des boole'schen Wertes (Innen/Aussen) in Hauptrichtung über die erste Schwelle A oder über zwei logisch UND-verknüpfte Richtungen gemäß der 45°-Stellung mit Nutzung der zweiten Schwelle B erfolgt. Dieses Verfahren hat deutliche Vorteile gegenüber der ansonsten auch möglichen vektoriellen Addition der Komponenten des Bereichsabgrenzungssignals 13, die bei idealen Antennen als optimal angesehene Verrechnungsmethode zwischen den Richtungen, um lageunabhängige Systeme zu erhalten. Insbesondere gestattet dieses Verfahren den Einsatz von nicht idealen Ferritantennen als induktiv empfangende Systeme in der zweiten Einrichtung 5 bei der Ortung entsprechend einer Innen/Außen-Abgrenzung.

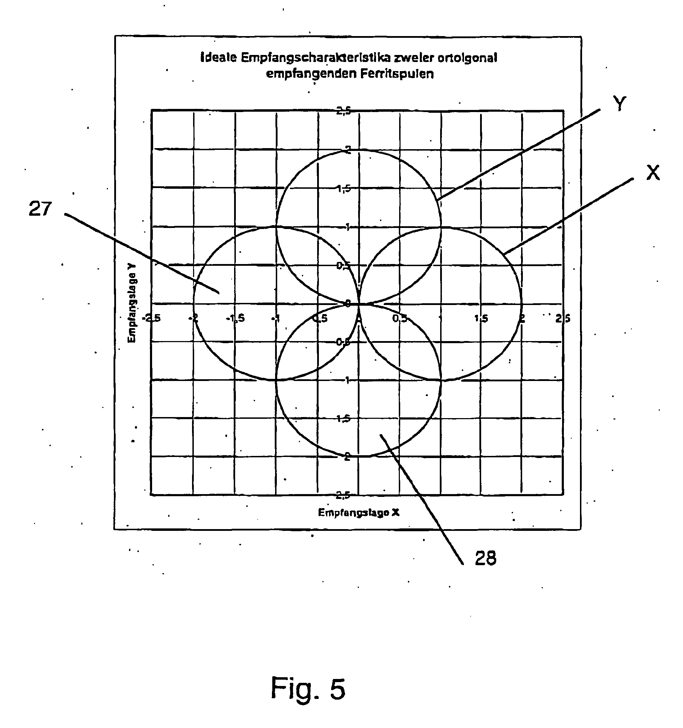

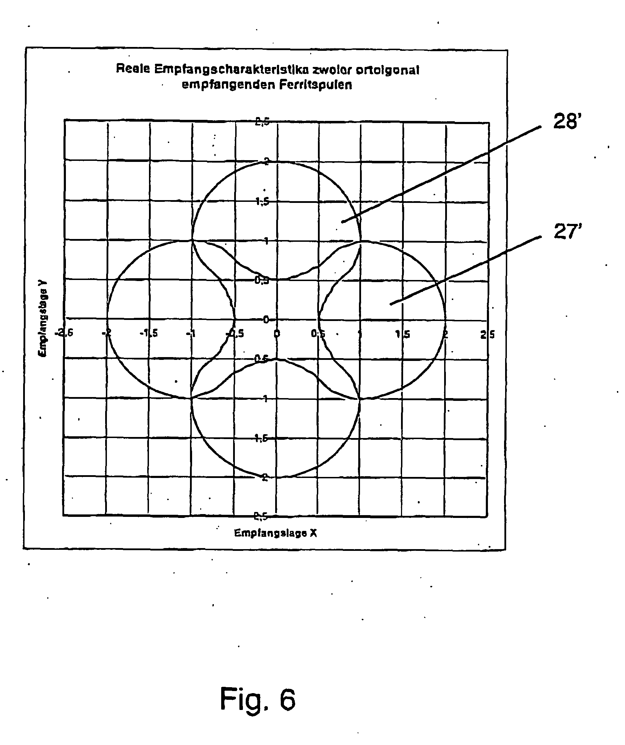

Zur Verdeutlichung ist in Fig. 5 die Empfangscharakteristik zweier orthogonal empfangender Ferritspulen als Antennen in der zweiten Einrichtung 5 entsprechend einer zweidimensionalen Ebene gezeigt, wobei die ideale Empfangscharakteristik 27 der x-Antenne und die ideale Empfangscharakteristik 28 der y-Antenne in der zweiten Einrichtung 5 zu sehen sind. In Fig. 6 ist die reale Empfangscharakteristik 27' der x-Antenne und die reale Empfangscharakteristik 28' der y-Antenne in der zweiten Einrichtung 5 zu sehen.

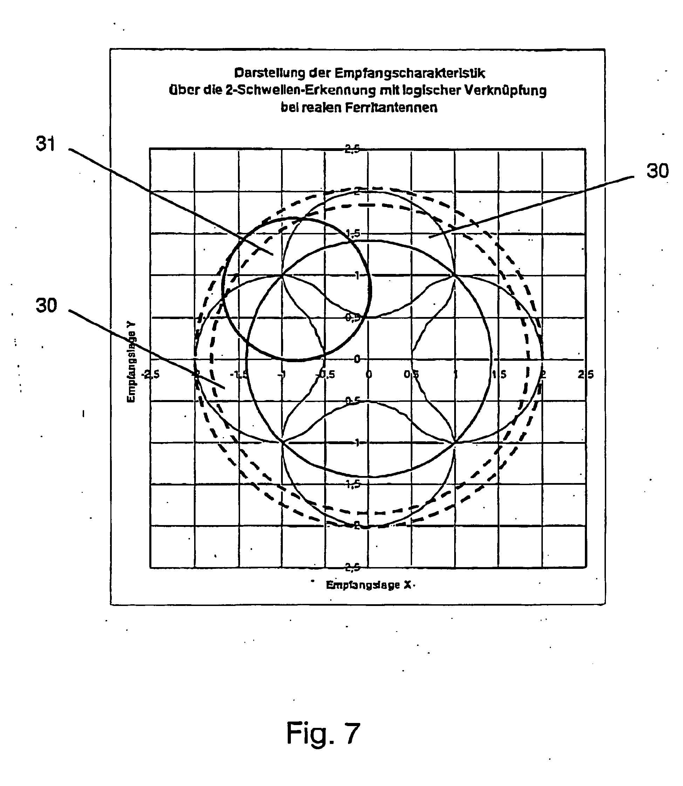

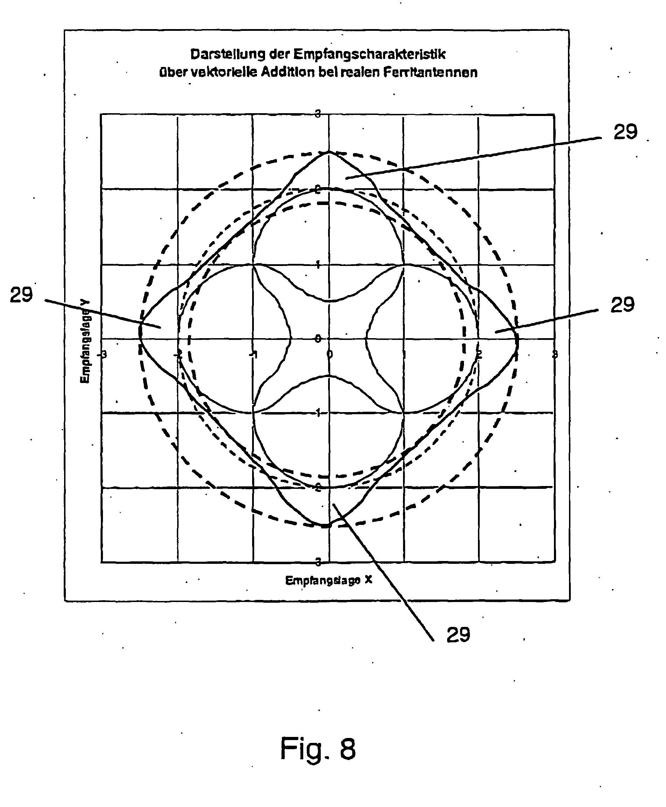

In Fig. 7 und 8 ist eine Visualisierung der erfindungsgemäßen sowie der vektoriellen Verrechnungsmethoden in einer zweidimensionalen Ebene bei realen Antennen in der zweiten Einrichtung 5 dargestellt .

In den Bereichen mit dem Winkel 0° und 90° treten bei der vektoriellen Addition die größten Fehler entsprechend den Bereichen 29 auf, da die Nebenrichtung (orthogonal stehende Richtung), die eigentlich Null sein müßte, trotzdem empfängt, wie man anhand der Fig. 8 sieht. Genau in dieser Lage, die als eine der Hauptrichtungen bezeichnet ist, grenzt das Zweifach-Schwellwert-Verfahren exakt ab, ebenso wie auch in den 45°-Lagen. Dies ist anhand des Bereichs 30 für die Hauptrichtungen sowie des Bereichs 31 für eine der 45°-Lagen in Fig. 7 zu erkennen. Lediglich in den Zwischenlagen, beispielsweise bei 22,5°, 37,5° o. dgl. ist gemäß Fig. 7 ein minimaler Berechnungsfehler im geringen %-Bereich ersichtlich.

Die Erfindung ist nicht auf das beschriebene und dargestellte Ausführungsbeispiel beschränkt. Sie umfaßt vielmehr auch alle fachmännischen Weiterbildungen im Rahmen der Schutzrechtsansprüche. So kann ein derartiges Schließsystem nicht nur im Kraftfahrzeug eingesetzt werden. Es ist auch eine Verwendung für ein sonstiges Türschloß, das sich beispielsweise an einer Immobilie o. dgl. befindet, möglich.

Bezugszeichen-Liste:

| | |
|---|---|
| 1: | Kraftfahrzeug |
| 2: | (berechtigter) Benutzer |
| 3: | Schließsystem |
| 4: | erste Einrichtung |
| 5: | zweite Einrichtung |
| 6: | Autotüre |
| 7: | Signal |
| 8: | Wirkbereich |
| 9: | Zündschloß |
| 10: | Lenkradverriegelung |
| 11: | Start/Stop-Schalter |
| 12: | Signal / Wecsignal |
| 13: | Signal / Bereichsabgrenzungssignal |
| 14: | Signal / Rückantwortsignal |
| 15: | Signal / (codiertes) Betriebssignal |
| 16: | Türgriff |
| 17: | Sender/Empfänger (in der zweiten Einrichtung) |
| 18: | Logikschaltung / Mikroprozessor |
| 19: | Mittel zur Messung der Feldstärke / RSS-Chip |
| 20: | Eingang (von RSS-Chip) |
| 21: | RSSI-Ausgang (an RSS-Chip) |
| 22: | Innenraum (von Kraftfahrzeug) |
| 23: | Außenraum (von Kraftfahrzeug) |
| 24a: | Sender (im linken Türbereich) |
| 24b: | Sender (im rechten Türbereich) |
| 24c: | Sender (im Heckbereich) |
| 24d: | Sender (im Frontbereich) |
| 25a: | linker Türbereich |
| 25b: | rechter Türbereich |
| 25c: | Heckbereich |
| 25d: | Frontbereich |
| 26: | Speicher |
| 27: | ideale Empfangscharakteristik (für x-Antenne) |
| 27': | reale Empfangscharakteristik (für x-Antenne) |
| 28: | ideale Empfangscharakteristik (für y-Antenne) |
| 28': | reale Empfangscharakteristik (für y-Antenne) |
| 29: | Bereich (mit Fehler) |
| 30: | Bereich in Hauptrichtung (ohne Fehler) |
| 31: | Bereich in 45°-Lage (ohne Fehler) |

## Patentansprüche

1. Verfahren zum Betrieb eines Schließsystems, insbesondere für die Zugangs-und/oder Fahrberechtigung bei einem Kraftfahrzeug (1) in der Art einer KeylessEntry/Go-Funktionalität, mit einer wenigstens zwei Zustände besitzenden, als Steuereinrichtung ausgebildeten ersten Einrichtung (4), wie einer Steuereinrichtung zur Ent- und/oder Verriegelung der Autotüren (6), des Zündschlosses (9), der Lenkradverriegelung (10), zur Freigabe und/oder Sperrung der Wegfahrsperre, des Motorsteuergeräts o. dgl., und mit einer zugehörigen, in der Art eines elektronischen Schlüssels, eines ID-Gebers, einer Chipkarte o. dgl. ausgebildeten zweiten Einrichtung (5), wobei zwischen den beiden Einrichtungen (4, 5) zu deren bestimmungsgemäßen Betrieb Signale (7) übertragen werden, wobei es sich insbesondere bei wenigstens einem der übertragenen Signale (7) um ein codiertes Betriebssignal (15) zur Authentikation der zweiten Einrichtung (5) handelt, so daß nach positiver Auswertung des übertragenen Betriebssignals (15) bei berechtigter zweiter Einrichtung (5) eine Änderung des Zustandes der ersten Einrichtung (4) bewirkbar ist, wobei in der zweiten Einrichtung (5) die Feldstärken. (F, RSSI) für wenigstens zwei orthogonal aufeinander stehende Komponenten für ein von der ersten Einrichtung (4) übertragenes Bereichsabgrenzungssignal (13) gemessen werden, und wobei in der zweiten Einrichtung (5) anhand der gemessenen Feldstärke (F, RSSI) sowie deren Auswertung mittels eines vorgegebenen Schwellwertes der Standort der zweiten Einrichtung (5) in Bezug auf die erste Einrichtung (4) in der Art eines Bereichs (8; 25a, b, c, d) ermittelt wird, indem zur Standortenmittlung die Feldstärke (F, RSSI) jeder Komponente mit einem ersten Schwellwert (A) sowie weiter mit einem zweiten Schwellwert (B) verglichen wird, wobei der zweite Schwellwert (B) kleiner als der erste Schwellwert (A) ist, und lediglich mittels logischer, insbesondere boole'scher Verknüpfungen der Ergebnisse dieser Vergleiche der Bereich (8; 25a, b, c, d) für den Standort bestimmt wird.

2. Verfahren zum Betrieb eines Schließsystems nach Anspruch 1, **dadurch gekennzeichnet, daß** in der zweiten Einrichtung (5) die Feldstärken (F, RSSIx, RSSIy, RSSIz) für drei vertikal aufeinander stehende Komponenten, insbesondere in die x-/y-/z-Raumrichtungen, des Bereichsabgrenzungssignals (13) gemessen werden.

3. Verfahren zum Betrieb eines Schließsystems nach Anspruch 1 oder 2, **dadurch gekennzeichnet, daß** der zweite Schwellwert (B) in Höhe von in etwa der Größe des ersten Schwellwerts (A) geteilt durch Wurzel aus 2 (A $\surd$2) gewählt wird.

4. Verfahren zum Betrieb eines Schließsystem nach Anspruch 1, 2 oder 3, **dadurch gekennzeichnet, daß** Bereichsabgrenaungssignale (13) von an der linken sowie gegebenenfalls rechten Seite des Kraftfahrzeugs (1), insbesondere in der jeweiligen Autotüre (6), angeordneten Antennen (24a, b), vorzugsweise von einer im Heckbereich, insbesondere an der Hutablage, angeordneten Antenne (24c) und weiter vorzugsweise einer im Frontbereich, insbesondere am Armaturenbrett, Innenspiegel o. dgl., angeordneten Antenne (24d) übertragen werden, daß noch weiter vorzugsweise die Bereichsbestimmung für die jeweilige Antenne (24a, b, c, d) vorgenommen wird, und daß nochmals weiter vorzugsweise durch logische, insbesondere boole'sche Verknüpfung in der Art von Schnittmengen der Bereiche (25a, b, c, d) für die jeweilige Antenne (24a, b, c, d) die Bestimmung des Standortes der zweiten Einrichtung (5) entsprechend Innen/Außen in Bezug auf das Kraftfahrzeug (1) erfolgt

5. Verfahren zum Betrieb eines Schließsystems nach einem der Ansprüche 1 bis 4, **dadurch gekennzeichnet, daß** der Bereich Innen/Außen (22, 23) für den Standort der zweiten Einrichtung (5) mit Hilfe der folgenden Formel ermittelt wird:

$$\text{Innen} = ((\text{AntLinks}) \land (\text{AntRechts})) \lor (\text{AntFront}) \lor (\text{AntHeck})$$

sowie

$$\text{Außen} = \text{sonst}$$

wobei

$$\text{AntLinks} / \text{AntRechts} / \text{AntFront} / \text{AntHeck}$$
$$= ((\text{RSSIx} > A) \lor (\text{RSSIy} > A) \lor (\text{RSSIz} > A)) \lor ((\text{RSSIx} > B) \land (\text{RSSIz} > B)) \lor$$

$$((\text{RSSIy} > B) \land (\text{RSSIz} > B)) \lor ((\text{RSSIx} > B) \land (\text{RSSIy} > B))$$

für das Bereichsabgrenzungssignal der jeweiligen Antenne mit der Bedeutung

RSSI: Feldstärkesignal mit Richtungsindex der entsprechenden Antenne
A: Schwellwert für erste Schwelle
B: Schwellwert für zweite Schwelle

ist.

6. Verfahren zum Betrieb eines Schließsystems nach einem der Ansprüche 1 bis 5, **dadurch gekennzeichnet, daß** die beiden Schwellwerte (A, B) in der Art von kalibrierten Werten in einen Speicher (26), beispielsweise ein EEPROM, der zweiten Einrichtung (5) eingeschrieben werden.

7. Schließsystem, insbesondere für die Zugangs-und/oder Fahrberechtigung bei einem Kraftfahrzeug (1) in der Art einer KeylessEntry/Go-Funktionalität, mit einer wenigstens zwei Zustände besitzenden, als Steuereinrichtung ausgebildeten ersten Einrichtung (4), wie einer Steuereinrichtung zur Ent- und/oder Verriegelung der Autotüren (6), des Zündschlosses (9), der Lenkradverriegelung (10), zur Freigabe und/oder Sperrung der Wegfahrsperre, des Motorsteuergeräts o. dgl., und mit einer zugehörigen, in der Art eines elektronischen Schlüssels, eines ID-Gebrs, einer Chipkarte o. dgl. ausgebildeten zweiten Einrichtung (5), wobei die beiden Einrichtungen (4, 5) zu deren bestimmungsgemäßen Betrieb Mittel zum Senden und/oder Empfangen von Signalen (7) besitzen, und wobei es sich insbesondere bei wenigstens einem der zwischen der zweiten Einrichtung (5) und der ersten Einrichtung (4) übertragenen Signale (7) um ein codiertes Betriebssignal (15) zur Authentikation der zweiten Einrichtung (5) handelt, so daß nach positiver Auswertung des übertragenen Betriebssignals (15) bei berechtigter zweiter Einrichtung (5) eine Änderung des Zustandes der ersten Einrichtung (4) bewirkbar ist, wobei in der zweiten Einrichtung (5) ein Mittel (19) zur Messung der Feldstärken (F, RSSI) für wenigstens zwei orthogonal aufeinander stehende Komponenten wenigstens eines von der ersten Einrichtung (4) übertragenen Bereichsabgrenzungssignals (13) angeordnet ist, und wobei in der zweiten Einrichtung (5) anhand der gemessenen Feldstärke (F, RSSI) sowie deren Auswertung mittels eines vorgegebenen Schwellwertes der Standort der zweiten Einrichtung (5) in Bezug auf die erste Einrichtung (4) ermittelbar ist, indem in der zweiten Einrichtung (5) ein Mittel zum Vergleich der Feldstärken (F, RSSI) der Komponenten des Bereichsabgrenzungssignals (13) mit einem ersten Schwellwert (A) sowie weiter mit einem zweiten Schwellwert (B), der insbesondere kleiner als der erste Schwellwert (A) ist, befindlich ist, und sich in der zweiten Einrichtung (5) ein Mittel (18) zur logischen, insbesondere boole'schen Verknüpfung der Ergebnisse dieser Vergleiche für die Bestimmung des Bereichs (24a, b, c, d) für den Standort der zweiten Einrichtung (5) befindet.

8. Schließsystem nach Anspruch 7, **dadurch gekennzeichnet, daß** an der linken sowie gegebenenfalls rechten Seite des Kraftfahrzeugs (1), insbesondere in der jeweiligen Autotüre (6), Antennen (24a, b) angeordnet sind, daß vorzugsweise im Heckbereich, insbesondere an der Hutablage, eine Antenne (24c) angeordnet ist, und daß weiter vorzugsweise im Frontbereich, insbesondere am Armaturenbrett, Innenspiegel o. dgl., eine Antenne (24d) angeordnet ist, derart daß zur Bereichsbestimmung, insbesondere zur Bestimmung des Standortes der zweiten Einrichtung (5) entsprechend Innen/Außen in Bezug auf das Kraftfahrzeug (1), Bereichsabgrenzungssignale (13) für die jeweilige Antenne (24a, b, c, d) übertragen werden.

9. Schließsystem nach Anspruch 7 oder 8, **dadurch gekennzeichnet, daß** die zweite Einrichtung (5) einen Speicher (26), beispielsweise ein EEPROM, besitzt, in den die beiden Schwellwerte (A, B), insbesondere in der Art von kalibrierten Werten, eingeschrieben sind.

10. Schlüssel in der Art eines elektronischen Schlüssels, eines ID-Gebers, einer Chipkarte o. dgl. für ein Schließsystem (3), insbesondere für die Zugangs- und/oder Fahrberechtigung bei einem Kraftfahrzeug (1) in der Art einer KeylessEntry/Go-Funktionalität zur Ent- und/oder Verriegelung der Autotüren (6), des Zündschlosses (9), der Lenkradverriegelung (10), zur Freigabe und/oder Sperrung der Wegfahrsperre, des Motorsteuergeräts o. dgl., wobei der Schlüssel zu dessen bestimmungsgemäßen Betrieb Mittel zum Senden und/oder Empfangen von Signalen (7) besitzt, wobei im Schlüssel ein Mittel (19) zur Messung der Feldstärken (F, RSSI) für wenigstens zwei orthogonal aufeinander stehende Komponenten wenigstens eines übertragenen Bereichsabgrenzungssignals (13) angeordnet ist, und wobei im Schlüssel anhand der gemessenen Feldstärke (F, RSSI) sowie deren Auswertung mittels eines vorgegebenen Schwellwertes der Standort des Schlüssels in Bezug auf das Kraftfahrzeug (1) ermittelbar ist, indem im Schlüssel ein Mittel zum Vergleich der Feldstärken (F, RSSI) der Komponenten des Bereichsabgrenzungssignals (13) mit einem ersten Schwellwert (A) sowie weiter mit einem zweiten Schwellwert (B), der insbesondere kleiner als der erste Schwellwert (A) ist, befindlich ist, und sich im Schlüssel ein Mittel (18) zur logischen, insbesondere boole'schen Verknüpfung der Ergebnisse dieser Vergleiche für die Bestimmung des Bereichs (24a, b, c, d) für den Standort des Schlüssels befindet.

11. Schlüssel nach Anspruch 10, **dadurch gekennzeichnet, daß** der Schlüssel einen Speicher (26), beispielsweise ein EEPROM, besitzt, in den die beiden Schwellwerte (A, B), insbesondere in der Art von kalibrierten Werten, eingeschrieben sind.

**Claims**

1. Method for operating a locking system, in particular for authorising access to and/or driving of a motor vehicle (1) in the manner of a keyless entry/go function, comprising a first means (4) configured as a control means and having at least two states, such as a means for controlling the unlocking and/or locking of the car doors (6), the ignition lock (9), the steering wheel lock (10), for releasing and/or locking the immobiliser, the engine control device or the like, and comprising an associated second means (5) configured in the manner of an electronic key, an ID transmitter, a chip card or the like, wherein signals (7) are transmitted between the two means (4, 5) for the orderly operation thereof, at least one of the transmitted signals (7) being, in particular, a coded operating signal (15) for authenticating the second means (5), so the state of the first means (4) can be changed after positive evaluation of the transmitted operating signal (15) if the second means (5) is authorised, the field strengths (F, RSSI) for at least two components located orthogonally to one another being measured in the second means (5) for a range demarcation signal (13) transmitted by the first means (4) and the location of the second means (5) relative to the first means (4) being calculated in the manner of a range (8; 25a, b, c, d) in the second means (5) on the basis of the measured field strength (F, RSSI) and the evaluation thereof using a predetermined threshold value, in that, for calculating the location, the field strength (F, RSSI) of each component is compared with a first threshold value (A) and also with a second threshold value (B), the second threshold value (B) being smaller than the first threshold value (A), and the range (8; 25a, b, c, d) for the location being determined merely using logical, in particular Boolean, operations of the results of these comparisons.

2. Method for operating a locking system according to claim 1, **characterised in that** the field strengths (F, RSSIx, RSSIY, RSSIz) for three components located vertically to one another, in particular in the x/y/z directions in space, of the range demarcation signal (13) are measured in the second means (5).

3. Method for operating a locking system according to either claim 1 or claim 2, **characterised in that** the amount of the second threshold value (B) is selected to be approximately of the same order of magnitude as the first threshold value (A) divided by the root of 2 (A/√2).

4. Method for operating a locking system according to claim 1, claim 2 or claim 3, **characterised in that** range demarcation signals (13) are transmitted by antennas (24a, b) arranged on the left and optionally on the right-hand side of the motor vehicle (1), in particular in the respective car door (6), preferably by an antenna (24c) arranged in the tail region, in particular on the rear parcel shelf, and also preferably by an antenna (24d) arranged in the front region, in particular on the dashboard, interior mirror or the like, **in that** the range is also preferably determined for each antenna (24a, b, c, d) and **in that** the location of the second means (5), corresponding to the interior/exterior with regard to the vehicle (1), is also preferably determined by logical, in particular Boolean, operations in the manner of intersections of the ranges (25a, b, c, d) for each antenna (24a, b, c, d).

5. Method for operating a locking system according to any one of claims 1 to 4, **characterised in that** the region interior/exterior (22, 23) is calculated for the location of the second means (5) using the following formula:

$$\text{interior} = ((\text{AntLeft}) \wedge (\text{AntRight})) \vee (\text{AntFront}) \vee (\text{AntTail})$$

and

$$\text{exterior} = \text{other}$$

wherein

$$\text{AntLeft/AntRight/AntFront/AntTail}$$
$$= ((\text{RSSIx} > A) \lor (\text{RSSIy} > A) \lor (\text{RSSIz} > A)) \lor (\text{RSSIx} > B) \land (\text{RSSIz} > B)) \lor$$
$$((\text{RSSIy} > B) \land (\text{RSSIz} > B)) \lor ((\text{RSSIx} > B) \land (\text{RSSIy} > B))$$

has the following meaning for the range demarcation signal of each antenna:

RSSI: field strength signal with directional index of the corresponding antenna
A: threshold value for the first threshold
B: threshold value for the second threshold.

6. Method for operating a locking system according to any one of claims 1 to 5, **characterised in that** the two threshold values (A, B)are written in the manner of calibrated values into a memory (26), for example an EEPROM, of the second means (5).

7. Locking system, in particular for authorising access to and/or driving of a motor vehicle (1) in the manner of a keyless entry/go function, comprising a first means (4) configured as a control means and having at least two states, such as a means for controlling the unlocking and/or locking of the car doors (6), the ignition lock (9), the steering wheel lock (10), for releasing and/or locking the immobiliser, the engine control device or the like, and comprising an associated second means (5) configured in the manner of an electronic key, an ID transmitter, a chip card or the like, wherein the two means (4, 5) have, for the orderly operation thereof, means for the transmission and/or receiving of signals (7), and at least one of the signals (7) transmitted between the second means (5) and the first means (4) being, in particular, a coded operating signal (15) for authenticating the second means (5), so the state of the first means (4) can be changed after positive evaluation of the transmitted operating signal (15) if the second means (5) is authorised, a means (19) for measuring the field strengths (F, RSSI) for at least two components located orthogonally to one another of at least one range demarcation signal (13) transmitted by the first means (4) being arranged in the second means (5), and wherein the location of the second means (5) with regard to the first means (4) can be calculated in the second means (5) on the basis of the measured field strength (F, RSSI) and the evaluation thereof using a predetermined threshold value, in that the second means (5) comprises a means for comparing the field strength (F, RSSI) of the components of the range demarcation signal (13) with a first threshold value (A) and also with a second threshold value (B) which is, in particular, smaller than the first threshold value (A), and the second means (5) contains a means (18) for the logical, in particular Boolean, operation of the results of these comparisons for determining the range (24a, b, c, d) for the location of the second means (5).

8. Locking system according to claim 7, **characterised in that** antennas (24a, b) are arranged on the left and optionally on the right-hand side of the motor vehicle (1), in particular in the respective car door (6), **in that** an antenna (24c) is arranged preferably in the tail region, in particular on the rear parcel shelf, and **in that** an antenna (24d) is also arranged preferably in the front region, in particular on the dashboard, interior mirror or the like, in such a way that range demarcation signals (13) are transmitted for each antenna (24a, b, c, d) for determining the range, in particular for determining the location of the second means (5), corresponding to the interior/exterior with regard to the motor vehicle (1).

9. Locking system according to either claim 7 or claim 8, **characterised in that** the second means (5) has a memory (26), for example an EEPROM, into which the two threshold values (A, B) are written, in particular in the manner of calibrated values.

10. Key in the manner of an electronic key, an ID transmitter, a chip card or the like for a locking system (3), in particular for authorising access to and/or driving of a motor vehicle (1) in the manner of a keyless entry/go function for unlocking and/or locking the car doors (6), the ignition lock (9), the steering wheel lock (10), for releasing and/or locking the immobiliser, the engine control device or the like, wherein the key has, for the orderly operation thereof, means for the transmission and/or receiving of signals (7), the key containing a means (19) for measuring the field strength (F, RSSI) for at least two components located orthogonally to one another of at least one transmitted range demarcation signal (13), and wherein the location of the key with regard to the motor vehicle (1) can be calculated in the key on the basis of the measured field strength (F, RSSI) and the evaluation thereof using a predetermined threshold value, in that the key contains a means for comparing the field strengths (F, RSSI) of the components of the range demarcation signal (13) with a first threshold value (A) and also with a second threshold value (B) which is, in particular, smaller than the first threshold value (A), and the key contains a means (18) for the logical, in particular Boolean, operation of the results of these comparisons for determining the range (24a, b, c, d) for the location of the key.

**11.** Key according to claim 10, **characterised in that** the key has a memory (26), for example an EEPROM, into which the two threshold values (A, B) are written, in particular in the manner of calibrated values.

## Revendications

**1.** Procédé de commande d'un système de verrouillage, en particulier pour l'autorisation d'accès et/ou de conduite dans un véhicule automobile (1) sous forme de fonctionnalité accès sans clé/marche, comportant un premier dispositif (4) et configuré comme dispositif de commande à au moins deux états, pour déverrouiller et/ou verrouiller les portières de voiture (6), la serrure (9), le volant (10), pour débloquer et/ou bloquer le dispositif anti-démarrage, le calculateur moteur ou autres, et un deuxième dispositif (5) correspondant en forme de clé électronique, de transmetteur ID, d'une carte à puce ou autres, des signaux (7) étant transmis entre les deux dispositifs (4, 5) pour leur fonctionnement conforme à leur destination, dont au moins un des signaux (7) transmis est en particulier un signal de fonctionnement (15) codé permettant d'authentifier le deuxième dispositif (5), de sorte qu'après une analyse positive du signal de fonctionnement (15) transmis, lorsque le deuxième dispositif (5) est autorisé, il est possible d'initier une modification de l'état du premier dispositif (4), en mesurant les intensités de champ (F, RSSI) pour au moins deux composantes orthogonalement placées l'une sur l'autre, dans le deuxième dispositif (5), composantes d'un signal de délimitation de zone (13) transmis par le premier dispositif (4), et, en déterminant, dans le deuxième dispositif (5), le lieu d'implantation du deuxième dispositif (5) par rapport au premier dispositif (4), sous forme de zone (8 ; 25a, b, c, d) à l'aide de l'intensité de champ (F, RSSI) mesurée ainsi que de son analyse au moyen d'une valeur de seuil prédéfinie, en comparant pour déterminer le lieu d'implantation, l'intensité de champ (F, RSSI) de chaque composante à une première valeur de seuil (A) ainsi qu'en outre à une deuxième valeur de seuil (B) inférieure à la première valeur de seuil (A), pour déterminer la zone (8 ; 25a, b, c) du lieu d'implantation seulement au moyen de combinaisons logiques, en particulier booléennes, des résultats de ces comparaisons.

**2.** Procédé de commande d'un système de verrouillage selon la revendication 1,
**caractérisé en ce que**
dans le deuxième dispositif (5), on mesure les intensités de champ (F, RSSIx, RSSIy, RSSIz) des trois composantes disposées verticalement l'une sur l'autre, en particulier dans les directions spatiales x/y/z, du signal de délimitation de zone (13).

**3.** Procédé de commande d'un système de verrouillage selon la revendication 1 ou selon la revendication 2,
**caractérisé en ce que**
la deuxième valeur de seuil (B) choisie est approximativement égale à la première valeur de seuil (A) divisée par la racine carrée de 2 (A / $\sqrt{2}$).

**4.** Procédé de commande d'un système de verrouillage selon la revendication 1, 2 ou 3,
**caractérisé en ce que**
des signaux de délimitation de zone (13) sont transmis par des antennes (24a, b) disposées sur le côté gauche ainsi que, le cas échéant, sur le côté droit du véhicule automobile (1), en particulier dans la portière de voiture (6) concernée, de préférence par une antenne (24c) disposée à l'arrière, en particulier sur la plage arrière et également, de préférence, par une antenne (24d) disposée à l'avant, en particulier sur le tableau de bord, le rétroviseur intérieur, ou autre,
en outre, on détermine de préférence la zone pour l'antenne (24a, b, c) concernée, et
une nouvelle fois, de manière préférée, on détermine le lieu d'implantation du deuxième dispositif (5) à l'intérieur/extérieur par rapport au véhicule automobile (1) de préférence par combinaison logique, en particulier booléenne sous forme d'intersections d'ensembles des zones (25a, b, c, d) pour l'antenne respective (24a, b, c, d).

**5.** Procédé de commande d'un système de verrouillage selon l'une quelconque des revendications 1 à 4,
**caractérisé en ce qu'**
on détermine la zone intérieur/extérieur (22, 23) pour le lieu d'implantation du deuxième dispositif (5) à l'aide des formules suivantes :

$$\text{Intérieur} = ((\text{AntLinks}) \land (\text{AntRechts})) \lor (\text{AntFront} \lor) (\text{AntHeck})$$

ainsi que

$$\overline{\text{Extérieur} = \text{sinon},}$$

dans lesquelles on a pour le signal de délimitation de zone de l'antenne respective :

$$\text{AntLinks} / \text{AntRechts} / \text{AntFront} / \text{AntHeck}$$
$$= ((\text{RSSIx} > A) \lor (\text{RSSIy} > A) \lor (\text{RSSIz} > A)) \lor ((\text{RSSIx} > B) \land (\text{RSSIz} > B))$$
$$\lor ((\text{RSSIy} > B) \land (\text{RSSIz} > B)) \lor (\text{RSSIx} > B) \land (\text{RSSIy} > B))$$

avec les significations suivantes :

RSSI : Signal d'intensité de champ avec un indice de direction de l'antenne correspondante,
A : valeur de seuil du premier seuil,
B : valeur de seuil du deuxième seuil.

**6.** Procédé de commande d'un système de fermeture selon l'une quelconque des revendications 1 à 5,
**caractérisé en ce que**
les deux valeurs de seuil (A, B) sont inscrites, sous forme de valeurs calibrées, dans une mémoire (26), par exemple une EEPROM, du deuxième dispositif (5).

**7.** Système de verrouillage, en particulier pour l'autorisation d'accès et/ou de conduite dans un véhicule automobile (1) sous forme de fonctionnalité accès sans clé/marche, comportant au moins un premier dispositif (4) configuré sous forme de dispositif de commande, possédant deux états pour déverrouiller et/ou verrouiller les portières de voiture (6), la serrure (9), le volant (10), pour débloquer et/ou bloquer le dispositif anti-démarrage, le calculateur moteur ou autres, et un deuxième dispositif (5) correspondant en forme de clé électronique, de transmetteur ID, d'une carte à puce ou autres, les deux dispositifs (4, 5) possédant, pour leur fonctionnement conforme à leur destination, des moyens pour envoyer et/ou recevoir des signaux (7), dont au moins un des signaux (7) transmis entre le deuxième dispositif (5) et le premier dispositif est en particulier un signal de fonctionnement (15) codé permettant l'authentification du deuxième dispositif (5), de sorte qu'après une analyse positive du signal de fonctionnement (15) transmis, lorsque le deuxième dispositif (5) est autorisé, il est possible d'initier une modification de l'état du premier dispositif (4), avec dans le deuxième dispositif (5), un moyen (19) de mesure des intensités de champ (F, RSSI) d'au moins deux composantes orthogonalement superposées d'au moins un signal de délimitation de zone (13) transmis par le premier dispositif (4), le lieu d'implantation du deuxième dispositif (5) pouvant être déterminé, par rapport au premier dispositif (4), dans le deuxième dispositif (5) à l'aide de l'intensité de champ (F, RSSI) mesurée ainsi que de son analyse au moyen d'une valeur de seuil prédéfinie, par l'intermédiaire dans le deuxième dispositif (5) d'un moyen de comparaison des intensités de champ (F, RSSI) des composantes du signal de délimitation de zone (13) à une première valeur de seuil (A) ainsi qu'à une deuxième valeur de seuil (B) en particulier inférieure à la première valeur de seuil (A), et avec dans le deuxième dispositif (5), un moyen (18) de combinaison logique, en particulier booléenne, des résultats de ces comparaisons pour déterminer la zone (24a, b, c) du lieu d'implantation du deuxième dispositif (5)

**8.** Système de verrouillage selon la revendication 7,
**caractérisé par**
des antennes (24a, b) du côté gauche ainsi que, le cas échéant, du côté droit du véhicule automobile (1), en particulier dans la portière de voiture (6) respective,
une antenne (24c) de préférence à l'arrière, en particulier sur la plage arrière, et
d'une autre manière préférée, une antenne (24d) à l'avant, en particulier sur le tableau de bord, le rétroviseur intérieur, ou autres, de manière à transmettre des signaux de délimitation de zone (13) pour l'antenne (24a, b, c, d) respective, pour déterminer une zone, en particulier pour déterminer le lieu d'implantation du deuxième dispositif (5) à l'intérieur/extérieur par rapport au véhicule automobile (1).

9. Système de verrouillage selon la revendication 7 ou la revendication 8,
   **caractérisé en ce que**
   le deuxième dispositif (5) possède une mémoire (26), par exemple, une EEPROM, dans laquelle les deux valeurs de seuil (A, B) sont inscrites, en particulier sous forme de valeurs calibrées.

10. Clé sous forme de clé électronique, d'un transmetteur ID, d'une carte à puce ou autres pour un système de verrouillage (3), en particulier pour une autorisation d'accès et/ou de conduite dans un véhicule automobile (1) sous forme de fonctionnalité accès sans clé/marche pour verrouiller et/ou déverrouiller les portières de voiture (6), la serrure (9), le volant (10), débloquer et/ou bloquer le dispositif anti-démarrage, le calculateur moteur ou autres, la clé possédant des moyens d'envoi et/ou de réception de signaux (7) pour son fonctionnement conforme à sa destination, la clé comportant un moyen (19) pour mesurer les intensités de champ (F, RSSI) d'au moins deux composantes, superposées orthogonalement d'au moins un signal de délimitation de zone (13) transmis, la clé logeant pour déterminer dans la clé, le lieu d'implantation de la clé par rapport au véhicule automobile (1) à l'aide de l'intensité de champ (F, RSSI) mesurée ainsi que de son analyse au moyen d'une valeur de seuil prédéfinie, un moyen de comparaison des intensités de champ (F, RSSI) des composantes du signal de délimitation de zone (13) à une première valeur de seuil (A) ainsi qu'en outre à une deuxième valeur de seuil (B) en particulier inférieure à la première valeur de seuil (A), et avec dans la clé, un moyen (18) de combinaison logique, en particulier booléenne, des résultats de ces comparaisons pour déterminer la zone (24a, b, c) du lieu d'implantation de la clé .

11. Clé selon la revendication 10,
    **caractérisée en ce que**
    la clé possède une mémoire (26), par exemple une EEPROM, dans laquelle les deux valeurs de seuil (A, B) sont inscrites en particulier sous forme de valeurs calibrées.

Fig. 1

EP 1 588 909 B1

Fig. 2

EP 1 588 909 B1

Fig. 3

18

Fig. 4

Ideale Empfangscharakteristika zweier ortolgonal
empfangenden Ferritspulen

Fig. 5

Reale Empfangscharakteristika zwoler ortoigonal empfangenden Ferritspulen

Fig. 6

Darstellung der Empfangscharakteristik
über die 2-Schwellen-Erkennung mit logischer Verknüpfung
bei realen Ferritantennen

Fig. 7

Darstellung der Empfangscharakteristik
über vektorielle Addition bei realen Ferritantennen

Fig. 8